# EUROPÄISCHE PATENTSCHRIFT

(11) **EP 2 858 787 B1**
(45) Veröffentlichungstag und Bekanntmachung des Hinweises auf die Patenterteilung: **14.09.2016**
(21) Anmeldenummer: 13730159.4
(22) Anmeldetag: 11.06.2013
(51) Int. Cl.: B24B 55/03, B24B 55/12, B24B 57/00

(54) **VORRICHTUNG UND VERFAHREN ZUM ABTRENNEN VON SCHLEIFÖL AUS SCHLEIFSCHLÄMMEN**
DEVICE AND METHOD FOR SEPARATING GRINDING OIL FROM GRINDING SLURRIES
DISPOSITIF ET PROCÉDÉ DE SÉPARATION DE L'HUILE DE MEULAGE CONTENUE DANS DE LA BOUE DE MEULAGE

(30) Priorität: 12.06.2012 DE 102012209818
(43) Veröffentlichungstag der Anmeldung: 15.04.2015
(73) Patentinhaber: Erwin Junker Grinding Technology a.s., 27601 Mélník (CZ)
(72) Erfinder: HIMMELSBACH, Georg, 77716 Haslach (DE); ABENDSCHEIN, Günter, 77781 Biberach (DE)
(74) Vertreter: Leske, Thomas
(86) Internationale Anmeldenummer: PCT/EP2013/061997
(87) Internationale Veröffentlichungsnummer: WO 2013/186199

(56) Entgegenhaltungen:
- EP-A1- 0 463 442
- EP-A2- 0 515 011
- EP-B1- 1 030 755
- DE-A1- 19 936 474
- DE-A1-102009 054 076
- DE-B4- 19 839 846
- DE-C1- 4 224 953
- DE-C1- 19 532 802

## Beschreibung

Die Erfindung betrifft eine Vorrichtung und ein Verfahren zum Abtrennen von Schleiföl aus Schleifschlämmen.

In EP 0 463 442 A1 ist eine Vorrichtung zum Abtrennen von Schleiföl aus Schleifschlamm beschrieben, mit einem Rührbehälter mit einem im Rührbehälter gelagerten Rührwerk, einer im oberen Bereich des Rührbehälters angeordneten Zuführleitung für ölhaltigen Schleifschlamm, und jeweils einer im unteren Bereich des Rührbehälters angeordneten Zuführ- und Abführleitung für ein Trennmittel zum Abtrennen des Schleiföls aus dem Schleifschlamm, wobei das Rührwerk in einem ersten Betriebsmodus den ölhaltigen Schleifschlamm mit dem Trennmittel durch Rühren mischt.

Auf heutigen Schleifmaschinen wird beim Schleifvorgang häufig Schleiföl eingesetzt. Die abgeschliffenen Schleifpartikel bilden zusammen mit dem Schleiföl Schleifschlamm. Einerseits stellt der Schleifschlamm Sondermüll dar und kann daher nur mit relativ hohen Kosten entsorgt werden. Anderseits ist es sinnvoll, das Schleiföl vom Schleifschlamm abzutrennen, um einerseits dieses Schleiföl auch aus Kostengründen dem Schleifen wieder zuzuführen, anderseits stellen die Schleifpartikel wertvollen Rohstoff dar, welcher im Falle von Metall wieder eingeschmolzen werden kann. Letzteres ist jedoch nur möglich, wenn das Schleiföl aus dem Schleifschlamm möglichst vollständig abgetrennt ist.

Aus dieser Notwendigkeit heraus sind bereits Verfahren und Vorrichtungen zum Abtrennen von Schleiföl aus Schleifschlämmen bekannt geworden. In DE 10 2009 054 076 A1 sind ein Verfahren zum Abtrennen von Schleiföl aus Schleifschlämmen und eine Trennstation zur Durchführung des Verfahrens beschrieben. Grundlage des Verfahrens und der Funktion der Trennstation ist der Einsatz einer als Heizung dienenden Induktorplatte, auf welcher der Schleifschlamm ausgebreitet ist. Dabei erhitzt die Induktionswärme die in dem Schleifschlamm befindlichen ferro-magnetischen Stahl- oder Eisenteilchen, was zu einer Verringerung der Viskosität des im Schleifschlamm befindlichen Schleiföls führt. Auf Grund der verringerten Viskosität kann das erwärmte Schleiföl durch Öffnungen in einer gelochten Platte ablaufen. Das Verfahren und die Vorrichtung haben sich als gut funktionierend erwiesen, gleichwohl ist der Anteil im Schleifschlamm verbleibenden Schleiföls nach Entfernen des Schleiföls immer noch unbefriedigend hoch. Je höher der Anteil des Schleiföls ist, welcher wiedergewonnen werden kann, umso wirtschaftlicher ist das gesamte Verfahren. Aber selbst wenn noch relativ geringe Restmengen von Schleiföl im Schleifschlamm vorhanden sind, so führt das dazu, dass der Schleifschlamm als Sondermüll angesehen wird. Daher ist bei dem bekannten Verfahren vorgesehen, die Restmenge an Schleiföl zu verbrennen. Dies führt zwar dazu, dass die Schleifpartikel dem Rohstoffkreislauf wieder zugeführt werden können, es erfordert aber eine zusätzliche Anlage zum Verbrennen, was zudem hinsichtlich der relativ hohen Kosten des Schleiföls als unwirtschaftlich anzusehen ist, und vermindert die Menge an wieder verwertbarem Schleiföl.

Wegen der bekannten Schwierigkeiten, Öl vom Schleifschlamm zuverlässig und in ausreichendem Maße abzuscheiden, geht das Bearbeitungsverfahren gemäß EP 1 030 755 B1 einen völlig anderen Weg. Damit diese Entsorgungsprobleme bei der Beseitigung von Schleifschlamm wegfallen, wird die Schleifbearbeitung komplett weggelassen. Dem liegt die Überlegung zugrunde, dass die Abtrennung von Öl von abmessungsmäßig deutlich größeren Spänen aus der Bearbeitung wegen der viel geringeren spezifischen Oberfläche der Späne gegenüber Schleifstaub unproblematisch ist.

In DE 198 39 846 B4 ist eine Zentrifuge beschrieben, mittels welcher Schleifschlamm entölt wird. Der Zentrifugiervorgang basiert auf dem Dichteunterschied zwischen dem Schleiföl und den Schleifpartikeln. Prinzipiell werden mittels eines derartigen Zentrifugiervorgangs nennenswerte Schleifölanteile aus dem Schleifschlamm zwar entfernt und der getrocknete Schleifschlamm ist aus der Zentrifuge entnehmbar, wegen der teilweise sehr geringen Größe der Schleifpartikel werden diese entweder mit dem Schleiföl mitausgetragen, oder aber es verbleiben unzulässig hohe Anteile von Schleiföl im Schleifschlamm. Um zu vermeiden, dass der entölte Schleifschlamm dennoch als Sondermüll zu entsorgen ist, ist ein derartiges Zentrifugierverfahren allenfalls nur bedingt einsetzbar.

Noch ein anderer Weg wird bei einem bekannten Verfahren mit einer bekannten Vorrichtung gemäß DE 195 32 802 C1 beschritten. Bei diesem Verfahren und bei dieser Vorrichtung geht es um die Verwertung von Schleifschlämmen. Dabei erfolgt eine Trennung von metallischen und mineralischen Schleifspänen und Schleifmittelrückständen aus Schleiföl, wobei die in dieser Mischung enthaltene Organik anaerob-biologisch abgebaut wird. Dazu wird der aufgeheizte Schleifschlamm mit Faulschlamm versetzt und in einem beheizten Biogasreaktor anaerob behandelt. Bei diesem biologischen Abbauprozess wird Biogas erzeugt. Der entstehende Faulschlamm wird nach Verlassen des Biogasreaktors einer Fest-Flüssig-Trennung in einem Absetzbehälter unterzogen, wobei sich daran ein weiterer Schritt in einem Hydrozyklon anschließt, in welchem eine Fest-Fest-Trennung stattfindet. Nachteilig bei diesem Verfahren ist unter anderem, dass das relativ kostenintensive Schleiföl abgebaut, nicht aber wiedergewonnen wird.

In DE 42 24 953 C1 ist ein Verfahren zur Aufarbeitung von mit Öl behafteten Industrieschlämmen beschrieben. In dem Versuch, das in den Industrieschlämmen vorhandene Öl möglichst vollständig zu entfernen, werden die Ölbestandteile der Schlämme mit leichtsiedenden Kohlenwasserstoffen als Lösungsmittel aus den Schlämmen extrahiert. Anschließend werden die Lösungsmittelreste im entölten Extraktionsrückstand mit Dampf ausgestrippt. Als Lösungsmittel werden leichtsiedende Kohlenwasserstoffe verwendet. Zwar gelingt es mit diesem Verfahren, den Ölgehalt derartiger ölbehafteter Industrieschlämme auf bis zu etwa 0,3 % zu reduzieren, das abgetrennte Öl kann jedoch auf Grund der Versetzung mit den leichtsiedenden Kohlenwasserstoffen ohne aufwendige Behandlung nicht wiederverwendet werden. Damit wird nur ein Aspekt bei Schleifschlämmen gelöst, nämlich die Zuführung der von Öl in starkem Maße befreiten Schleifpartikel zu einer Verhüttung, ohne dass die Schleifpartikel als Sondermüll zu entsorgen sind. Eine Wiederaufarbeitung der ölbeladenen Lösungsmittel erfolgt allenfalls in einer nebengeordneten Altölrecyclinganlage. Zusätzlich muss mit Sattdampf das an den Schleifpartikeln haftende Restlösemittel ausgestrippt werden, was zu einem zusätzlichen Reinigungsvorgang führt, nämlich das Entfernen der Lösemittel aus dem Sattdampf. Dadurch ergibt sich ein insgesamt hoher apparativer Aufwand.

Schließlich ist in EP 0 515 011 A2 ein Verfahren zum Reinigen metallischer Schleifschlämme von Öl oder ölhaltigen Emulsionen beschrieben. Das Verfahren basiert darauf, dass der ölhaltige Schleifschlamm in einem ersten Verfahrensschritt ausgepresst wird. Das abgepresste Öl wird einer Altölentsorgung zugeführt, es ist also nicht beabsichtigt, dieses relativ kostenintensive Schleiföl einer Wiederverwendung zuzuführen. Anschließend muss der ausgetragene Schlamm zerkleinert und in einer Reinigerflüssigkeit mit waschaktiven Stoffen bei gleichzeitiger Aufheizung auf eine Temperatur > 50°C durchgewirbelt undgewaschen werden. Um eine einigermaßen effektive Abtrennung zu erreichen, muss der Waschvorgang in mindestens drei Chargen erfolgen, wobei nach jeder Charge die Reinigungsflüssigkeit abgelassen und durch neue ersetzt werden muss. Nach dem Waschen muss der Schlamm entwässert und mittels 40°C warmen Frischwasser gespült werden. Auch der Spülvorgang muss in mindestens drei Chargen erfolgen, wobei nach jeder Charge das Spülwasser abgelassen und durch neues ersetzt werden muss. Damit das Spülwasser möglichst wenig metallische Schleifpartikel mitführt, muss es über einen Magnetabscheider geleitet werden. Der gespülte Schlamm muss anschließend noch getrocknet werden und kann durch zusätzliches Pressen kompaktiert werden. Optional ist vorgesehen, die Reinigerflüssigkeit sowie das Spülwasser nach entsprechender chemischer Spaltung aufzubereiten und vom Restöl zu trennen. Für dieses Verfahren ist ein relativ hoher apparativer Aufwand erforderlich. Das Verfahren zielt nur darauf ab, einen möglichst nur noch mit geringem Ölanteil behafteten Schleifschlamm einem Wiedereinschmelzen zuzuführen. Eine Wiederverwendung des Schleiföls ist nicht möglich, so dass das abgetrennte Öl einer Altölentsorgung zuzuführen ist. Damit ist die Wirtschaftlichkeit des Verfahrens vor allen Dingen wegen der relativ hohen Kosten des Schleiföls nicht in ausreichendem Maße gegeben, auch wenn der Restölanteil im trockenen Schlamm ggf. weniger als ein Gewichtsprozent ist.

Die Aufgabe der Erfindung besteht daher darin, eine Vorrichtung und ein Verfahren zum Abtrennen von Schleiföl aus Schleifschlämmen bereitzustellen, welches mit geringem apparativen Aufwand ein hohes Maß an Abtrennung von Schleiföl aus den Schleifschlämmen derart gewährleistet, dass die Schleifschlämme nicht als Sondermüll zu entsorgen sind und einer Wiedereinschmelzung als Wertstoff wieder zugeführt werden können, und andererseits das Schleiföl wiederverwendbar ist beim Schleifen.

Diese Aufgabe wird durch eine Vorrichtung mit den Merkmalen gemäß Anspruch 1 und durch ein Verfahren mit den Merkmalen gemäß Anspruch 8 gelöst. Zweckmäßige Weiterbildungen sind in den jeweiligen abhängigen Ansprüchen definiert.

Erfindungsgemäß weist die Vorrichtung zur Abtrennung von Schleiföl aus mit diesem Schleiföl versetztem Schleifschlamm einen Rührbehälter auf, in welchem ein in einem Rührwerksführungsrohr geführtes Rührwerk gelagert und in dem Rührbehälter auf- und abwärts bewegbar ist. Das Rührwerk dient dazu, in den Behälter über eine im oberen Bereich des Rührbehälters angeordnete erste Zuführleitung eingebrachten ölhaltigen Schleifschlamm mit einem im Rührbehälter befindlichen bzw. ebenfalls eingebrachten Trennmittel zu verrühren. Im unteren Bereich des Rührbehälters sind einerseits eine Zuführ- und Abführleitung für das Trennmittel zum Abtrennen des Schleiföls aus dem Schleifschlamm sowie eine Abführleitung für ölabgereinigten Schleifschlamm vorgesehen.

Wenn der Schleifschlamm in den Rührbehälter eingebracht wird, befindet sich in diesem vorzugsweise bereits eine gewisse Menge an Trennmittel, damit der Schleifschlamm am Rührwerk nicht verklumpen kann bzw. dies nicht beschädigt. Zusätzlich mit diesem Schleifschlamm wird weiteres Trennmittel zugeführt, welches in seiner Grundzusammensetzung eine Tenside und ggf. auch Phosphate enthaltende wässrige Lösung darstellt, deren Wirkung darauf gerichtet ist, die Oberflächenspannung des an den einzelnen Schleifpartikeln des Schleifschlamms anhaftenden Schleiföls so zu verringern, dass das Schleiföl von den Schleifpartikeln des Schleifschlamms, insbesondere im Wesentlichen vollständig, abgetrennt werden kann.

Im unteren Bereich des Rührbehälters ist die Zuführ- und Abführleitung für das Trennmittel angeordnet. Bevor ölhaltiger Schleifschlamm in den Rührbehälter gegeben wird, ist vorzugsweise bereits eine gewisse Menge Trennmittel im Rührbehälter vorhanden, d.h. zuvor eingebracht worden. Zusätzlich zum ölhaltigen Schleifschlamm wird das weitere Trennmittel über die Zuführ- und Abführleitung zugeleitet. Da das Trennmittel für mehrere Rührzyklen des Rührwerks physikalisch aktiv bleibt, muss auch nur gelegentlich und dann auch nur ein gewisser Teil des im Rührbehälter befindlichen Trennmittels ausgetauscht, d. h. aus dem Rührbehälter abgeführt werden. Dies ist nämlich der Teil bzw. die Menge an Trennmittel, welche hinsichtlich ihrer Wirkung, das Öl von den Schleifpartikeln zu lösen, verbraucht ist. Dieses verbrauchte Trennmittel kann deshalb über die gemeinsame Zuführ- und Abführleitung aus dem Rührbehälter ausgetragen werden. Dabei wird das Trennmittel aus dem Rührbehälter in den Trennmittelbehälter gefördert. Aus diesem Trennmittelbehälter kann durch ein am Boden daran befindliches Ventil zumindest ein Teil des Trennmittels über eine von dem Trennmittelbehälter abgeführte Rohrleitung entleert werden und danach oder zeitgleich der Trennmittelbehälter mit neuem Trennmittel wieder aufgefüllt werden. Wenn sämtliches Trennmittel verbraucht sein sollte, kann selbstverständlich auch der Trennmittelbehälter komplett entleert werden und danach mit komplett neuem Trennmittel wieder aufgefüllt werden. Wenn nur ein Teil des Trennmittels wieder aufgefüllt wird, so weist das gesamte, im Trennmittelbehälter vorhandene Trennmittel wieder einen höheren Anteil an unverbrauchtem Trennmittel auf, so dass bei Zuführung des Trennmittels aus dem Trennmittelbehälter zu dem Reinigungsprozess das Trennmittel wieder aktiv die Abtrennung des Schleiföls aus dem Schleifschlamm bewirken kann.

Mit dem Schleifschlammaustrag wird auch stets ein gewisser Teil von Trennmittel mit abgeführt. Abgesehen von diesem sogenannten Schwund an Trennmittel, bezogen auf den gesamten Reinigungsprozess, geht Trennmittel nicht verloren. Zwar ist im Schleifschlammbehälter ein Trennsieb vorgesehen, welches der Abtrennung von mit dem Schleifschlamm abgeführtem Trennmittel ermöglicht. Eine 100%ige Abtrennung des Trennmittels aus dem Schleifschlamm wird damit aber verständlicherweise nicht erreicht.

Indem nach jedem Zyklus des Austragens von Schleifschlamm dieser Schwund an Trennmittel wieder aufgefüllt worden ist, bleibt die Menge an Trennmittel innerhalb des Rührbehälters im Wesentlichen konstant.

Bei einem normalen Reinigungsablauf wird immer nur verbrauchtes Trennmittel sowie der sogenannte Schwund wieder aufgefüllt. Prinzipiell ist es jedoch auch möglich, das Trennmittel nach einem oder vorzugsweise nach mehreren Durchläufen komplett auszutauschen. Der Austausch bzw. die korrigierende Zufuhr von Trennmittel zu dem Rührbehälter definiert sich durch die Menge an Schleiföl im Schleifschlamm, den Materialeigenschaften des Schleifschlamms sowie auch Kostenüberlegungen.

Durch das Rührwerk werden ölhaltiger Schleifschlamm und Trennmittel gleichmäßig, d. h. im Wesentlichen homogen, miteinander vermischt, so dass das Trennmittel möglichst an jedes einzelne Schleifschlammpartikel gelangt. Andererseits wird das Rührwerk nur mit einer solchen Drehzahl betrieben und weist das Trennmittel eine solche Eigenschaft auf, dass das im Schleifschlamm enthaltene und davon abgereinigte Schleiföl mit dem Trennmittel nicht in Emulsion geht.

Nach dem Stillsetzen des Rührwerks trennen sich das Schleiföl, der Schleifschlamm und im Wesentlichen das Trennmittel.

Da das abgereinigte Schleiföl eine geringere Dichte als das Trennmittel aufweist, steigt das von den Schleifpartikeln abgereinigte Schleiföl im Rührbehälter nach oben und schwimmt auf dem Trennmittel auf. Wenn im unteren Bereich des Rührbehälters sich genügend ölabgereinigter Schleifschlamm angesammelt hat, so kann dieser über die in die im unteren Bereich angeordnete Abführleitung aus dem Rührbehälter ausgebracht werden. Da mit dem eingesetzten Trennmittel und der erfindungsgemäßen Vorrichtung nur noch ein sehr geringer Restölgehalt im Schleifschlamm verbleibt, kann der Schleifschlamm, d. h. können die Schleifpartikel, einer Verhüttung zugeführt werden. Dadurch wird vermieden, dass der ansonsten als Sondermüll zu entsorgende Schleifschlamm nur kostenintensiv entsorgt werden kann. Im Rührbehälter ist erfindungsgemäß ein sich aufwärts und abwärts im Rührbehälter zwischen einem Bereich oberhalb einer Zuführöffnung der Zuführleitung für den ölhaltigen Schleifschlamm und einem Bereich oberhalb der Zuführ- und Abführleitung für das Trennmittel bewegender Ringteller vorgesehen.

Erfindungsgemäß gleitet dieser Ringteller an einer dem Innenraum des Rührbehälters zugewandten Außenseite des Rührwerksführungsrohres und an der Innenseite des Rührbehälters bei seiner Auf- und Abwärtsbewegung in einer abdichtenden Weise, beispielsweise nach Art einer Ringfeder wie bei einem Kaffeebereiter. Dadurch kann das durch das Trennmittel abgereinigte, auf diesem aufschwimmende Schleiföl nicht in einen Bereich im Rührbehälter oberhalb des Ringtellers gelangen. Der Ringteller weist einen Durchtritt für das Schleiföl auf, an welchem eine Ableitung für dieses Schleiföl vorgesehen ist. Das Schleiföl wird derartig zuverlässig und sauber aus dem Schleifschlamm mit Hilfe des Trennmittels abgetrennt, dass das Schleiföl ohne gesonderte intensivere Wiederaufbereitung einer Wiederverwendung zum Schleifen zugeführt werden kann. Das Rührwerk kann prinzipiell in einem ersten Betriebsmodus, in welchem der ölhaltige Schleifschlamm mit dem Trennmittel durch Rühren gemischt wird, und in einem zweiten Betriebsmodus betrieben werden, in welchem das Rührwerk im Stillstand verharrt. Nach entsprechender Stillstandszeit setzt sich das Schleiföl auf dem Trennmittel mit einer klaren Grenzschicht bzw. Trennschicht ab, wodurch es ohne Weiteres möglich ist, es über die Ableitung aus dem Rührbehälter abzuführen, ohne dass Trennmittel mitgeführt wird. Auch Schleifschlamm wird nicht mitgeführt, weil dieser sich wegen seiner größeren Dichte im unteren Bereich des Rührbehälters absetzt.

Ein wesentlicher Vorteil der erfindungsgemäßen Vorrichtung besteht darin, dass mittels eines einzigen Reinigungsbehälters ein hoher Grad einer Abreinigung von Schleiföl von den Schleifpartikeln des Schleifschlammes erzielt werden kann, und zwar ohne dass zahlreiche Einzelkomplexe bzw. -komponenten bzw. -aggregate dieser Vorrichtung vorgesehen sein müssten, in welchen jeweils separate Funktionen realisiert werden, wie dies im Stand der Technik der Fall ist. Vorzugsweise ist der Ringteller in Richtung auf das Rührwerksführungsrohr, d. h. die Außenseite dieses Rührwerksführungsrohres, welche dem Innern des Rührbehälters zugewandt ist, aufsteigend geneigt, wobei die Ableitung für das Schleiföl an der höchsten Stelle des Ringtellers angeordnet ist. Unter "höchster Stelle" wird dabei der Teil des Ringtellers angesehen, welcher aufgrund seiner Neigung zur Rührbehälteroberseite weist und unmittelbar neben der Außenseite des Rührwerksführungsrohres angeordnet ist. Dies ist nahe an der Abdichtstelle des Rührtellers an dem Rührwerksführungsrohr. Der Ringteller ist vorzugsweise bzgl. der Höhe des Rührbehälters aufwärts und abwärts bewegbar. Je nach Füllstand und auszuführender Funktion in Folge bspw. abgeführten Schleifschlamms oder abgeführten Schleiföls überdeckt der Ringteller das Gemisch aus Trennmittel und Schleifschlamm bzw. den Schleifschlamm.

Vorzugsweise ist das Rührwerk drehzahlgesteuert und ebenfalls im Rührbehälter aufwärts und abwärts bewegbar. Was eine Bewegung in Richtung auf den Ringteller betrifft, so werden diese Aufwärtsbewegung des Rührwerks einerseits und die entsprechende Abwärtsbewegung des Ringtellers so gesteuert, dass ein vorgewählter Mindestabstand zwischen dem Ringteller und dem Rührwerk nicht unterschritten wird. Vorzugsweise wird dies mittels Sensoren realisiert, welche den Abstand zwischen Ringteller und Rührwerk während ihrer im Rührbehälter ausgeführten vertikalen Bewegungen vorzugsweise permanent überwachen.

Vorzugsweise wird das Rührwerk derart gesteuert angetrieben in Rotation versetzt, dass das mittels Trennmittel vom Schleifschlamm abgetrennte Schleiföl beim Rühren nicht mit dem Trennmittel emulgiert, und weist der im Rahmen des zweiten Betriebsmodus des Rührwerks realisierte Stillstand eine solche Dauer auf, dass das aus dem Schleifschlamm abgetrennte Schleiföl mit einer deutlich ausgebildeten Trennfläche auf dem Trennmittel aufschwimmt, so dass es ohne Verunreinigung mit Trennmittel nach seinem Entfernen aus dem Rührbehälter dem Schleifen zur Wiederverwendung erneut zugeführt werden kann. Dadurch wird der beim Schleifen vorhandene relativ hohe Kostenfaktor des Einsatzes von Schleiföl minimiert, und eine negative Beeinflussung auf die Umwelt wird im Wesentlichen vermieden. Das Aufschwimmen des Schleiföls auf dem Trennmittel resultiert einerseits daher, dass die Dichte des Schleiföls geringer ist als die des Trennmittels, und rührt auch daher, dass wegen der deutlichen Differenz der Oberflächenspannungen das Schleiföl mit dem Trennmittel nicht emulgiert.

Um eine möglichst gleichmäßige homogene Mischung aus Schleifschlamm und Trennmittel im Rührbehälter zu erzielen, ohne dass das abgetrennte Schleiföl in dem Trennmittel in Emulsion geht, ist das Rührwerk vorzugsweise, insbesondere stufenlos, drehzahlgeregelt, um den Vorgang des Rührens, d. h. des Erzielens eines homogenen Gemisches aus Schleifschlamm und Trennmittel möglichst sanft durchzuführen, und ist außerdem in seiner Drehrichtung umkehrbar angetrieben.

Während das Rührwerk in seinem ersten Betriebsmodus im Rührbehälter rotiert, wird das Rührwerk im Rührbehälter vorzugsweise gleichzeitig aufwärts und abwärts bewegt.

Vorzugsweise sind in der Ableitung Sensoren zur Erfassung der Viskosität der darin abgeleiteten Flüssigkeit vorhanden, welche ein Signal liefern, wenn Trennmittel in die Ableitung eintritt, und daraufhin auf Basis des Signals ein Ventil in der Ableitung verschlossen wird. Dies ist erforderlich, damit das zurückgewonnene Schleiföl nicht mit Trennmittel vermischt wird.

Die Vorrichtung gemäß der Erfindung ist modulartig aufgebaut, so dass je nach gewünschten Durchsatzmengen eine Anlage mehrere derartige Rührbehälter aufweisen kann, wobei sämtliche Rührbehälter an einen externen Behälter für Trennmittel und andererseits einen externen Behälter für ölabgereinigten Schleifschlamm angeschlossen sein können. Es besteht aber auch die Möglichkeit, jedem Rührbehälter einen Behälter für Trennmittel und/oder jeweils einen Schleifschlammbehälter zuzuordnen. Aus Kostengründen werden dann aber meist mehrere Rührbehälter an einem Behälter für Trennmittel und einem Schleifschlammbehälter angeschlossen.

Gemäß einem zweiten Aspekt der Erfindung weist das erfindungsgemäße Verfahren zum Abtrennen von Schleiföl aus Schleifpartikel aufweisendem Schleifschlamm die nachfolgend aufgeführten Schritte auf, wobei das Verfahren ein zumindest quasi kontinuierliches Schleifschlamm-Trennverfahren darstellt.

In einem ersten Schritt wird eine vorbestimmte Menge an Trennmittel, welches der Verringerung der Oberflächenspannung des Schleiföls an den Schleifpartikeln dient, in einen Rührbehälter eingebracht, in welchem ein drehbar angebrachtes Rührwerk angeordnet ist. Die Menge an Trennmittel, welche in den Rührbehälter eingegeben wird, bevor Schleifschlamm diesem zugeführt wird, richtet sich hauptsächlich nach der Menge an Schleiföl im Schleifschlamm und nach Art des Schleiföles sowie auch bspw. nach Art des abgeschliffenen, im Schleifschlamm enthaltenen partikelförmigen Materials. In einem zweiten Schritt wird dem Rührbehälter Schleiföl aufweisender Schleifschlamm zusammen mit weiterem Trennmittel zugeführt, was unter Rotieren des Rührwerks im Rührbehälter stattfindet. Die Zufuhr von weiterem Trennmittel mit dem Schleifschlamm muss nicht zwingend kontinuierlich erfolgen. Durch das Rotieren des Rührwerks wird ein homogenes Gemisch aus Schleifschlamm und Trennmittel erzeugt. Das Rührwerk arbeitet im Rührbehälter solange, bis sichergestellt ist, das Trennmittel möglichst an sämtliche Schleifpartikel des Schleifschlammes gelangt, so dass möglichst sämtliches an den Schleifpartikeln haftendes Schleiföl von diesen abgetrennt werden kann. Nach Erzeugen dieses im Wesentlichen homogenen Gemisches wird das Rührwerk für vorzugsweise mehrere Minuten, insbesondere 5 bis 10 Minuten, stillgesetzt. Da das Trennmittel so ausgebildet ist und die Rotationsgeschwindigkeit des Rührwerks einen derartigen Wert aufweist, dass das abgetrennte Schleiföl mit dem Trennmittel nicht emulgiert, schwimmt letzteres auf dem Trennmittel auf, welcher Vorgang relativ rasch abläuft. Darüber hinaus bildet sich zwischen dem Trennmittel und dem Schleiföl wegen der unterschiedlichen Oberflächenspannungen eine klare Trennfläche aus, welche gewährleistet, dass im nachfolgenden Schritt das Schleiföl aus dem Rührbehälter ebenso wie der ölabgereinigte Schleifschlamm abgeführt werden können.

Das erfindungsgemäße Verfahren zeichnet sich durch einen hohen ökologischen Wert aus, weil einerseits das Schleiföl dem Schleifprozess wieder zugeführt werden kann, d. h. anders als im Stand der Technik nicht als Altöl entsorgt werden muss, und dass andererseits der Schleifschlamm derartig vom Schleiföl befreit ist, dass ggf. vorhandene geringe Restölmengen jedenfalls so gering sind, dass der Schleifschlamm kein Sondermüll ist und einer Verhüttung direkt wieder zugeführt werden kann.

Vorzugsweise wird bei dem Verfahren im Rührbehälter verbrauchtes Trennmittel abgeführt und eine der abgeführten Menge entsprechende Menge an frischem Trennmittel dem Rührbehälter wieder zugeführt. Zusätzlich wird der beim Austrag des Schleifschlamms vorhandene Schwund an Trennmittel durch Zufuhr einer dem Schwund entsprechenden Menge an Trennmittel ausgeglichen. Prinzipiell wird das Trennmittel für mehrere Zyklen des Rührens und Absetzens bzw. Aufschwimmen des Schleiföls auf dem Trennmittel eingesetzt, ohne dass die oberflächenspannungsverringernde Wirkung des Trennmittels nennenswert verlorengeht. Jedoch wird sich nach längerem Gebrauch die Zeit, während welcher das Rührwerk rotiert, verlängern, damit auch bei bereits jedenfalls geringfügig verbrauchtem Trennmittel dennoch gewährleistet werden kann, das Trennmittel mehr oder weniger direkt an jedes Schleifpartikel des Schleifschlammes gelangt und die oberflächenspannungsreduzierene Wirkung dennoch ausreichend vorhanden ist.

Vorzugsweise wird die aus dem Rührbehälter abgeführte Menge an verbrauchtem Trennmittel zusätzlich mit der Menge des zusammen mit dem Schleifschlamm dem Rührbehälter zugeführten weiteren Trennmittels gleichzeitig zugegeben, um das Verhältnis Trennmittel/Schleifschlamm im Rührbehälter letztendlich näherungsweise auf einem konstanten Niveau zu halten.

Vorzugsweise ist im Rührbehälter ein das Gemisch aus Schleifschlamm und Trennmittel abdeckender Ringteller vorhanden, welcher in Abstimmung mit dem Rührwerk in Höhenrichtung des Rührbehälters gesteuert verfahren wird. Während des Rührens ist der Ringteller oberhalb des Gemisches aus Schleifschlamm und Trennmittel mit einem Abstand angeordnet, weil während des Rührens aufgrund der durchaus turbulenten Verhältnisse der Ringteller stören würde. Außerdem wird während des Rührens das Rührwerk vorzugsweise im Rührbehälter aufwärts und abwärts verfahren. Der Ringteller und das Rührwerk werden dabei in einer gesteuerten Weise in Höhenrichtung so verfahren, dass stets ein vorgegebener Mindestabstand zwischen dem Ringteller und dem Rührwerk vorhanden ist. Wenn der Rührvorgang abgeschlossen ist und das Rührwerk in Stillstand versetzt worden ist und das Schleiföl auf dem Trennmittel aufgeschwommen ist, wird der Ringteller im Wesentlichen hohlraumfrei auf das obere Niveau des Schleiföles verfahren. Wenn Schleiföl aus dem Rührbehälter abgefördert wird, wird der Ringteller sozusagen auf das jeweilige Niveau des Schleiföles so lange nachgefahren, bis im Wesentlichen sämtliches Schleiföl aus dem Rührbehälter abgefördert worden ist. Sofern der Rührvorgang wiederholt werden soll, wird in diesem Fall der Ringteller wieder nach oben im Rührbehälter verfahren, so dass oberhalb des Gemisches aus Schleifschlamm und Trennmittel ein zum Zwecke des Rührens erforderlicher Hohlraum gebildet ist.

Vorzugsweise wird der ölabgereinigte, aus dem Rührbehälter abgeführte Schleifschlamm danach thermisch oder mechanisch getrocknet, wobei vorzugsweise das mechanische Trocknen durch Pressen erfolgt. Dieses Trocknen hat den Vorteil, dass das bei Abführen des Schleifschlamms in diesem eventuell vorhandene Trennmittel aus dem Schleifschlamm entfernt und dem Trennverfahren wieder zugeführt werden kann. Durch das mechanische Abpressen des Trennmittels aus dem Schleifschlamm wird gewährleistet, dass nahezu gereinigter, von Schleiföl und Trennmittel befreiter Schleifschlamm der Verhüttung problemlos wieder zugeführt werden kann.

Vorzugsweise wird das Verhältnis des in den Rührbehälter zugegebenen Schleifschlammes und des weiteren Trennmittels auf einen vorbestimmten Wert zueinander eingestellt, und beide werden dosiert in den Rührbehälter entsprechend diesem Verhältnis eingebracht.

Vorzugsweise wird der ölabgereinigte Schleifschlamm aus dem Rührbehälter abgepumpt. Der Schleifschlamm, welcher noch Trennmittel enthält, gelangt dabei in einen separaten Behälter, in welchem bspw. ein Sieb angeordnet sein kann, durch welches das Trennmittel aus dem Schleifschlamm im Wege des Abtropfens entfernt werden kann.

In den meisten Fällen ist es ausreichend, die Schritte des Rührens und des Stillsetzens einmal durchzuführen. Je nach Konsistenz und Bestandteilen des Schleifschlamms und verwendetem Schleiföl kann es jedoch durchaus sinnvoll sein, die Schritte des Rührens und Stillsetzens mindestens einmal zu wiederholen, um eine Abreinigung des Schleiföls aus dem Schleifschlamm in dem erforderlichen Maße sicher zu gewährleisten, so dass dieser Restölgehalt deutlich unter 3 % liegt.

Das abgetrennte Schleiföl wird aus dem Rührbehälter vorzugsweise zur direkten Wiederverwendung abgepumpt, abgesaugt oder aber durch den Durchtritt im Ringteller in die abgeschlossene Ableitung für Schleiföl gedrückt. Dabei wird der Ringteller auf das um das Volumen des abgepumpten oder abgesaugten Schleiföls reduzierte Höhenniveau des Gemisches im Rührbehälter abgesenkt, so dass der Ringteller im Wesentlichen hohlraumfrei das Gemisch im Rührbehälter nach oben hin abdeckt.

Weitere Vorteile und Ausführungsdetails der erfindungsgemäßen Vorrichtung sowie des erfindungsgemäßen Verfahrens werden aus der detaillierten Beschreibung der nachfolgenden Zeichnung deutlich. In der Zeichnung zeigen:
- Fig. 1: ein komplettes Anlagenmodul gemäß der Erfindung, bestehend aus Rührbehälter mit Ringteller, externem Schleifölbehälter, externem Trennmittelbehälter und externem ölabgereinigtem Schleifölbehälter mit unterschiedlichen Höhenstellungen des Ringtellers;
- Fig. 2A: zeigt den mit einem Gemisch aus Trennmittel und Schleifschlamm gefüllten Rührbehälter mit im unteren Bereich angeordnetem Rührwerk und das Gemisch im oberen Teil des Behälters abdeckendem Ringteller;
- Fig. 2B: zeigt diesen Rührbehälter gemäß Fig. 2A mit nach oben in den Bereich des Ringtellers verfahrenem Rührwerk;
- Fig. 3: zeigt den Rührbehälter mit einem gegenüber den Fig. 2A und 2B geringeren Füllstand des Gemisches aus Trennmittel und Schleifschlamm nach Abführen bzw. während des Abführens des Schleiföls;
- Fig. 4: zeigt einen im Wesentlichen von Trennmittel und Schleiföl entleerten Rührbehälter mit im unteren Bereich von diesem angeordneten Rührwerk und Ringteller; und
- Fig. 5: eine für einen höheren Durchsatz aus drei Rührbehältermodulen aufgebaute Trennanlage.

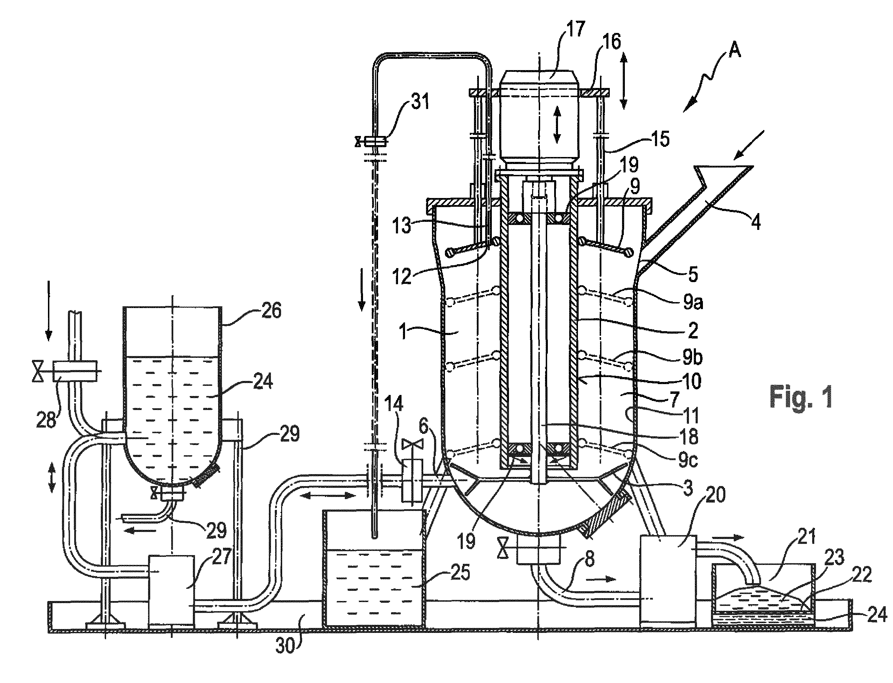

In Fig. 1 ist eine komplette Vorrichtung zum Abtrennen von Schleiföl aus Schleifschlamm dargestellt. Hauptteil der Vorrichtung bildet der Rührbehälter 1, in welchem ein Rührwerksführungsrohr 2 eine Welle 18 eines Rührwerks 3 lagernd aufnimmt, so dass das Rührwerk 3 stabil gehalten ist. Außerhalb des Rührbehälters 1 ist auf dem oberen Ende des Rührwerksführungsrohres 2 ein Antriebsmotor 17 installiert, mit welchem das Rührwerk 3 in Rotation versetzt werden kann. Dieser Motor ist drehzahlgeregelt und kann in beide Drehrichtungen betrieben werden, so dass das Rührwerk im Uhrzeigersinn wie auch gegen den Uhrzeigersinn drehbar betreibbar ist. Die gefahrene Drehzahl des Rührwerkes 3 richtet sich nach der Konsistenz des von Schleiföl zu reinigenden Schleifschlammes und des mit dem Schleifschlamm im Rührbehälter 1 ebenfalls vorhandenen Trennmittels. Die Baueinheit aus Rührwerksführungsrohr 2, Rührwerk 3 und Motor 17 ist innerhalb des Rührbehälters 1 gesteuert aufwärts und abwärts verfahrbar. Im oberen sich etwas erweiternden Bereich des Rührbehälters 1 ist eine Zuführleitung 4 für ölhaltigen Schleifschlamm über eine Zuführöffnung 5 an den Rührbehälter 1 angeschlossen. Zur einfacheren Einbringung des Schleifschlamms weist diese Zuführleitung 4 eine trichterförmige Erweiterung für die Aufnahme des Schleifschlammes auf. Im unteren Bereich des Rührbehälters 1 ist eine Zuführ- und Abführleitung 6 für Trennmittel 24 vorgesehen, welche über ein Ventil 14 für diese Zuführ- und Abführleitung abgesperrt werden kann und zu einer Trennmittelpumpe 27 führt, mittels welcher das über die Zuführ- und Abführleitung 6 für Trennmittel abgeführte oder zuführende Trennmittel mit dem Trennmittel 24 im Trennmittelbehälter 26 verbunden ist. Frisches Trennmittel wird dem Trennmittelbehälter 26 über eine nicht bezeichnete Zuführleitung, welche mittels eines Ventils 28 zum Zuführen von frischem Trennmittel verschlossen bzw. geöffnet werden kann, verbunden. Am Boden des Trennmittelbehälters 26 ist eine Trennmittelablassleitung 29 über ein nicht bezeichnetes Ventil angeschlossen.

Im unteren Bereich des Rührbehälters 1, und zwar an dessen am tiefsten gelegener Stelle ist eine Abführleitung 8 für ölabgereinigten Schleifschlamm 23 vorgesehen, welche mittels eines nicht gesondert bezeichneten Ventils verschlossen bzw. geöffnet werden kann. Die Abführleitung 8 ist mit einer Austragspumpe 20 für den ölabgereicherten Schleifschlamm 23 verbunden, mittels welcher der aus dem Rührbehälter 1 entnommene ölabgereicherte Schleifschlamm einem Schleifschlammbehälter 21 zugeführt wird, in welchem der Schleifschlamm 23 auf ein in dem Schleifschlammbehälter 21 vorhandenes Trennsieb aufgebracht wird, über welches mit dem ölabgereinigten Schleifschlamm in den Schleifschlammbehälter 21 mitausgetragenes Trennmittel aus dem Schleifschlamm 23 abgeschieden werden kann.

Ein Innenraum 7, welcher auch als Behandlungsraum im Rührbehälter 1 bezeichnet wird, wird durch die Innenseite 11 des Rührbehälters 1 und die Außenseite 10 des Rührwerkführungsrohres 2 gebildet. Oberhalb der Zuführöffnung 5 ist ein Ringteller 9 vorgesehen, welcher von der Außenwand des Rührbehälters in Richtung auf die Außenseite 10 des Rührwerkführungsrohres 2 ansteigend geneigt ist. Dieser Ringteller 9 ist mit einem zumindest beidseitig vorgesehenen Führungsgestänge 15 verbunden, welches über ein Joch 16 bzw. einen Träger untereinander verbunden ist. Mittels des Jochs 16 bzw. eines Trägers wird über das Führungsgestänge 15 der Ringteller 9 im Rührbehälter 1 aufwärts und abwärts bewegt. Im obersten Bereich des Ringtellers 9 weist dieser einen Durchtritt 12 für Schleiföl auf, welcher mit einer Ableitung 13 für dieses Schleiföl verbunden ist. Diese Ableitung 13 weist außerhalb des Rührbehälters 1 ein Ventil 31 auf. Über die Ableitung 13 für Schleiföl und über das Ventil 31 wird das abgeführte Schleiföl 25 in einen nicht gesondert bezeichneten Behälter abgeführt. Zusätzlich kann dazu eine Pumpe oder eine anders geartete Absaugvorrichtung vorgesehen sein. Der Ringteller 9 wird nach dem Befüllen des Rührbehälters 1 mit Schleifschlamm und Trennmittel an den Füllstand im Rührbehälter unter Belassung eines Hohlraumes herangefahren. Dies ist durch die gestrichelt dargestellte Position 9a des Ringtellers gezeigt. Darunter ist eine ebenfalls gestrichelte Position 9b des Ringtellers gezeigt, welche einen im Wesentlichen um das abgereinigte Schleiföl teilentleerten Rührbehälter zeigt. Schließlich ist eine Position 9c des Ringtellers gestrichelt gezeichnet, in welcher der Ringteller an seiner tiefsten Position angeordnet ist, nämlich wenn der Rührbehälter 1 nahezu komplett von Trennmittel geleert worden ist, woran sich ein Austrag des im Rührbehälter 1 vorhandenen Schleifschlamms anschließt. Das Rührwerk 3 ist über eine Antriebswelle 18 mit dem Motor 17 verbunden und wird in am oberen und am unteren Ende des Rührwerksführungsrohrs 2 vorhandenen Lagerungen 19 drehbar gelagert. Die gesamte Vorrichtung einschließlich der Behälter 21, 26 für ölabgereinigten Schleifschlamm, Schleiföl und Trennmittel sind aus Gründen der Sicherheit und der Wasserhaushaltsgesetze in einer Sicherheitswanne 30 angeordnet.

Der Rührbehälter 1 ist im Wesentlichen zylindrisch ausgebildet, so dass beim Rotieren des Rührwerks 3 im Rührbehälter 1 kein Totraum entsteht und in möglichst kurzer Zeit ein homogenes Gemisch aus Schleifschlamm und Trennmittel entsteht, so dass im Wesentlichen sämtliche Schleifpartikel mit Trennmittel umspült werden, damit nahezu sämtliches Schleiföl von den Schleifpartikeln des Schleifschlamms "abgewaschen" werden kann. Der Rührbehälter 1 in Verbindung mit dem Rührwerk 3 ist also so gestaltet, dass ein homogenes Gemisch aus Trennmittel und Schleifschlamm in vertretbar kurzer Zeit erreicht werden kann, ohne dass die Drehzahlen des Rührwerks 3 sehr hoch sein müssen, so dass ein Emulgieren des Schleiföls im Trennmittel verhindert wird. Die Drehzahlen des Rührwerks 3 liegen daher je nach Anforderungsfall im Bereich von ca. 100 bis 1000 min.⁻¹. Der Rundbehälter hat einen Durchmesser von vorzugsweise 500 bis 700 mm und eine Höhe von vorzugsweise 1000 bis 1500 mm, wobei in Abhängigkeit von zu reinigender Schleifschlammmenge, eingesetztem Trennmittel und weiteren Faktoren davon abweichende Abmessungen vorgesehen sein können.

Die verschiedenen Positionen des Ringtellers 9, 9a, 9b und 9c, welche in der Fig. 1 angedeutet sind, entsprechen den folgenden auszuführenden Funktionen:

Wenn sich der Ringteller 9 in seiner durch durchgezogene Linien dargestellten obersten Position befindet, d. h. er ist oberhalb der Zuführöffnung 5 der Zuführleitung 4 für ölhaltigen Schleifschlamm angeordnet, erfolgt das Beladen des Behälters mit Schleifschlamm und Trennmittel.

Nachdem die Beladung des Rührbehälters 1 vollzogen ist, wird der Ringteller 9 in den Bereich unterhalb der Zuführöffnung 5 für den Schleifschlamm auf die Oberfläche des Gemisches aus Schleifschlamm und Trennmittel nach unten verfahren in einen Bereich des Rührbehälters, in welchem eine zylindrische Wandung vorhanden ist, so dass der Ringteller 9 an der Innenseite 11 des Rührbehälters einerseits und an der Außenseite 10 des Rührwerksführungsrohr 2 andererseits abdichtet. In dieser Position 9a erfolgt das Rühren durch Rotation des Rührwerks 3 bei gleichzeitigem gegebenenfalls erforderlichem Aufwärts- und abwärtsverfahren desselben.

Nachdem ein im Wesentlichen homogenes Gemisch aus Schleifschlamm und Trennmittel erzeugt worden ist, erfolgt nach einer vorzugsweise 5 bis 10-minütigen Ruhephase bzw. Stillstandszeit des Rührwerks 3, nach welcher das Schleiföl auf dem Trennmittel aufgeschwommen ist. Daran schließt sich ein Abdrücken des Schleiföls über den Durchtritt 12 in den Ringteller 9 und die Ableitung 13 für Schleiföl bis hin zur Position 9b an.

Nachdem das Schleiföl in der Position 9b abgedrückt worden ist, kann ein Abdrücken des Trennmittels und ein Austragen des Schleifschlamms durch Verfahren des Ringtellers 9 in die Position 9c erreicht werden.

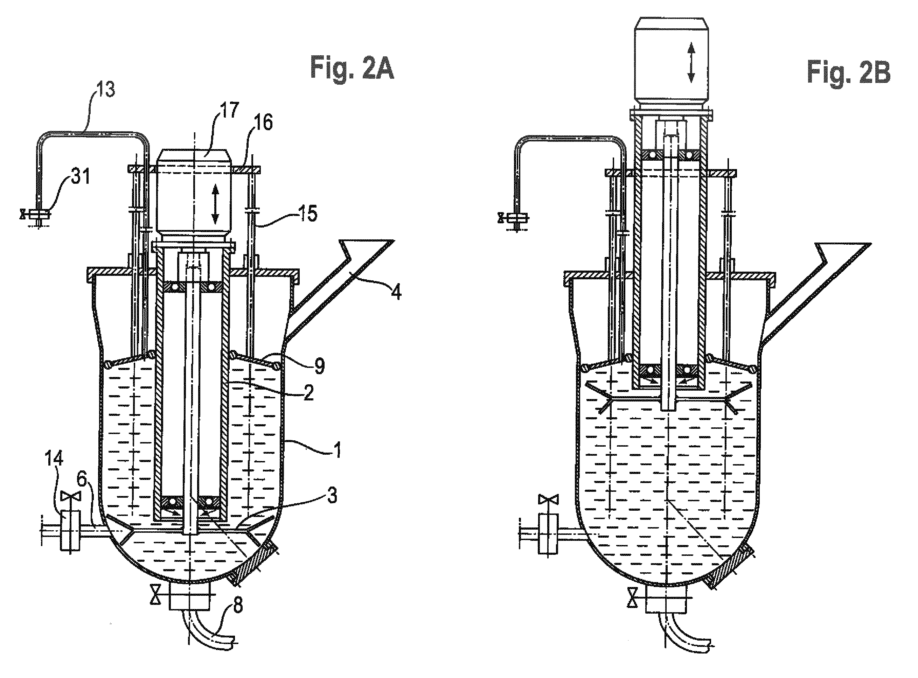

In den Fig. 2A und 2B tragen die in Fig. 1 bezeichneten Teile dieselben Bezugsziffern, so dass sämtliche Teile für die Beschreibung der Anlage hier nicht wiederholt werden. In Fig. 2A ist ein beladener Zustand des Rührbehälters 1 gezeigt, in welchem ein Gemisch aus ölhaltigem Schleifschlamm und Trennmittel in seinem etwa maximalen Füllstand eingefüllt ist. Der Ringteller 9 ist unterhalb der Zufuhröffnung 5 für Schleifschlamm in einem Bereich angeordnet, ab welchem die Außenwand des Rührbehälters 1 in Richtung nach unten einen konstanten Durchmesser aufweist. In diesem Bereich ist der Ringteller 9 sowohl an der Innenseite 11 des Rührbehälters als auch der Außenseite 10 des Rührwerkführungsrohres 2 anliegend und abdichtend angeordnet. Der Ringteller 9 ist oberhalb des oberen Füllstandsniveaus im Rührbehälter 1 mit Hohlraum angeordnet. Das Rührwerk 3 ist im unteren Bereich des Rührbehälters 1 angeordnet.

Demgegenüber ist bei gleichem Füllstand des Füllbehälters in Fig. 2B das Rührwerk 3 in seine Position kurz unterhalb des Ringtellers 9 verfahren. Damit wird deutlich, dass zur Erzeugung eines homogenen Gemisches aus Schleifschlamm und Trennmittel es sinnvoll ist, das Rührwerk 3 in seiner Höhe im Rührbehälter 1 ggf. auch mehrfach aufwärts und abwärts kontinuierlich zu verfahren, um sicherzustellen, dass in allen Bereichen des Gemisches aus Trennmittel und Schleifschlamm ein möglichst homogenes Gemisch vorliegt, bei welchem das Trennmittel an möglichst jedes einzelne Schleifpartikel des Schleifschlammes geführt werden kann.

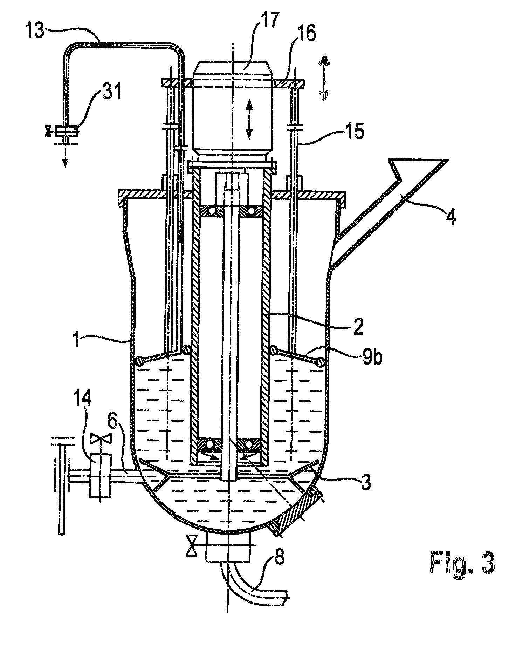

In Fig. 3 ist eine ähnliche Situation wie in Fig. 2A dargestellt, lediglich mit dem Unterschied, dass der Füllstand im Rührbehälter verringert ist. Ein solcher Füllstand existiert bspw. dann, wenn Schleiföl 25 über die Ableitung 13 für das Schleiföl abgeführt worden ist. Aus Fig. 3 ist ersichtlich, dass je nach Füllstand im Rührbehälter 1 der Ringteller 9 immer auf das obere Niveau des Gemisches im Wesentlichen hohlraumfrei verfahren wird, nachdem das Rührwerk stillgesetzt worden ist und Schleiföl aufgeschwommen bzw. noch nicht vollständig abgeführt worden ist.

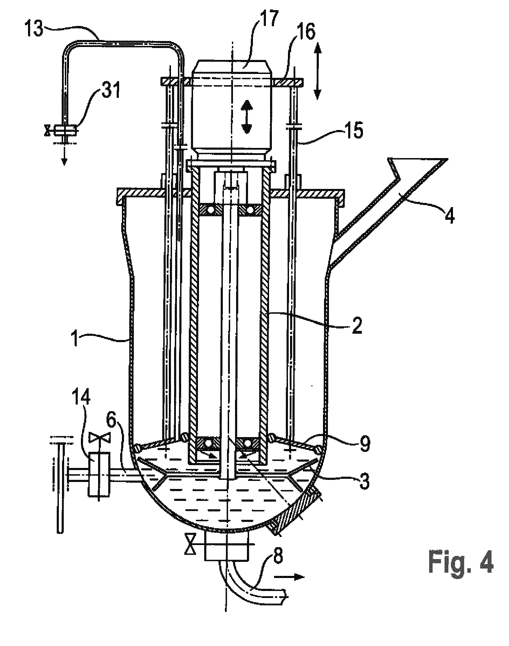

Und schließlich ist in Fig. 4 ein nahezu entleerter Rührbehälter 1 dargestellt, bei welchem das Rührwerk in seiner untersten Position ist und der Ringteller 9 bis nahezu an das Rührwerk herangefahren ist. Wenn aus der untersten Position im Rührbehälter der ölabgereinigte Schleifschlamm über die Abführleitung 8 aus dem Rührbehälter 1 abgeführt worden ist, befindet sich in der in Fig. 4 dargestellten Position im Wesentlichen nur noch Trennmittel im Rührbehälter 1, welches die Voraussetzung bildet, dass bei erneuter Zugabe von ölhaltigem Schleifschlamm über die Zuführleitung 4 in den Rührbehälter 1 dieser Schleifschlamm nicht an dem Rührwerk 3 verklumpt.

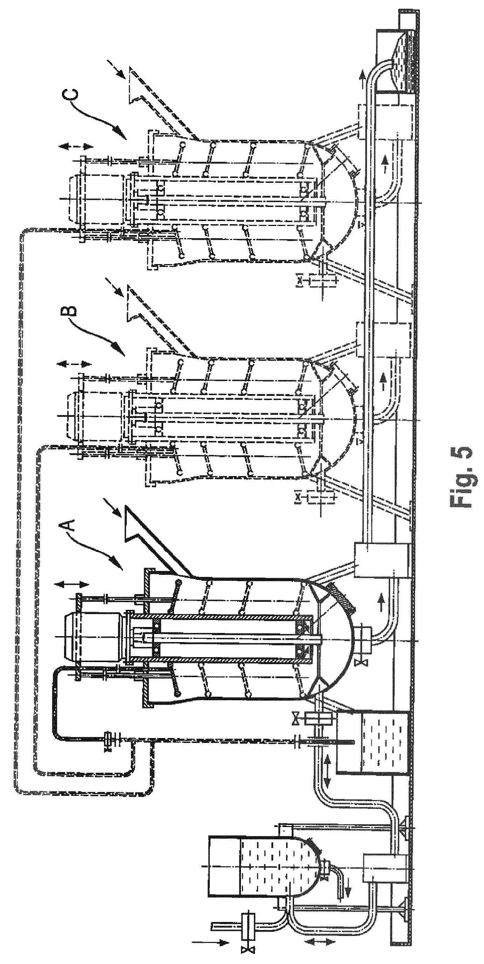

In Fig. 5 ist schließlich dargestellt, dass bei gewünschten höheren Durchsätzen die Anlage bei ihrem modulartigen Aufbau durchaus erweitert werden kann dergestalt, dass mehrere Reinigungsmodule A, B, C zu einer Anlage dann durchaus auf einer Sicherheitswanne zusammengefasst angeordnet werden können, wobei sämtliche Rührbehälter der Reinigungsmodule mit jeweils entsprechend dimensionierten Tanks für ölabgereinigten Schleifschlamm, Schleiföl und Trennmittel verbunden sein können.

Mit der erfindungsgemäßen Anlage ist es somit möglich, im quasi kontinuierlichen Betrieb ölhaltigen Schleifschlamm bis auf Werte von Schleiföl zu befreien, dass dieser ohne Weiteres einer Verhüttung zugeführt werden kann und das abgereinigte Schleiföl einer Wiederverwendung beim Schleifen zugeführt werden kann. Altöl fällt somit mit der erfindungsgemäßen Anlage nahezu nicht an, was den ökologischen Wert einer derartigen Anlage gegenüber den bekannten Anlagen stark verbessert.

Die Vorrichtung ist prinzipiell dazu geeignet, auf einem Fahrzeug wie bspw. einem Lastkraftwagen oder einem anderen geeigneten Transportmittel installiert zu werden. Sie kann aber auch fest installiert in einer Fertigungshalle im Bereich bspw. der Schleifmaschinen installiert sein, um unnötige Transportwege für den Schleifschlamm zu vermeiden. Die Installation von mobilen oder stationären Anlagen ist auf Grund des modulartigen Aufbaus der Vorrichtung frei wählbar. Im Fall einer mobilen Vorrichtung ist es bspw. auch denkbar, dass der Schleifschlamm im Kundenauftrag auf Anforderung gereinigt wird. Ebenso ist es möglich, eine Anlage größerer Kapazität stationär zu errichten und den Schleifschlamm von mehreren Kunden zu der Anlage zu transportieren.

Der modulartige Aufbau der Vorrichtung ermöglicht, dass bspw. eine erste Ausbaustufe später nachgerüstet werden kann.

Je nach Anforderung, Menge des zu reinigenden Schleifschlamms, Aufstellort etc. kann die Vorrichtung manuell oder vollautomatisch gesteuert werden.

Neben der Tatsache, dass der ölabgereinigte Schleifschlamm einer Verhüttung zugeführt werden kann und das abgereinigte Schleiföl unmittelbar dem Schleifprozess wieder zugeführt werden kann, ist von Bedeutung, dass das Trennmittel vorzugsweise biologisch abbaubar ist.

### Bezugszeichenliste

- 1: Rührbehälter
- 2: Rührwerksführungsrohr
- 3: Rührwerk
- 4: Zuführleitung für ölhaltigen Schleifschlamm
- 5: Zuführöffnung
- 6: Zuführ- und Abführleitung für Trennmittel
- 7: Innenraum des Rührbehälters
- 8: Abführleitung für ölabgereinigten Schleifschlamm
- 9: Ringteller
- 9a, b, c: Höhenpositionen des Ringtellers im Rührbehälter
- 10: Außenseite des Rührwerksführungsrohres
- 11: Innseiten des Rührbehälters
- 12: Durchtritt für Schleiföl
- 13: Ableitung für Schleiföl
- 14: Ventil für Zuführ- und Abführleitung für Trennmittel
- 15: Führungsgestänge
- 16: Joch bzw. Träger
- 17: Antriebsmotor
- 18: Rührwerkswelle
- 19: Lagerung der Rührwerkswelle
- 20: Austragspumpe für ölabgereinigten Schleifschlamm
- 21: Schleifschlammbehälter
- 22: Trennsieb
- 23: ölabgereinigter Schleifschlamm
- 24: Trennmittel
- 25: Schleiföl
- 26: Trennmittelbehälter
- 27: Trennmittelpumpe
- 28: Ventil zum Zuführen von frischem Trennmittel
- 29: Trennmittelablassleitung
- 30: Sicherheitswanne
- 31: Ventil für Ableitung von Schleiföl
- A, B, C: Reinigungsmodule

## Patentansprüche

1. Vorrichtung zum Abtrennen von Schleiföl (25) aus Schleifschlamm, aufweisend
a) einen Rührbehälter (1) mit einem im Rührbehälter aufwärts- und abwärtsbewegbaren, in einem Rührwerksführungsrohr (2) gelagerten Rührwerk (3);
b) eine im oberen Bereich des Rührbehälters (1) angeordnete Zuführleitung (4) für ölhaltigen Schleifschlamm;
c) jeweils eine im unteren Bereich des Rührbehälters (1) angeordnete Zuführ- und Abführleitung (6) für ein Trennmittel (24) zum Abtrennen des Schleiföls (25) aus dem Schleifschlamm und eine Abführleitung (8) für ölabgereinigten Schleifschlamm (23);
d) einen im Rührbehälter (1) zwischen einem Bereich oberhalb einer Zuführöffnung (5) der Zuführleitung (4) für den ölhaltigen Schleifschlamm und einem Bereich oberhalb der Zuführ- und Abführleitung (6) für das Trennmittel aufwärts und abwärts bewegbaren Ringteller (9);
e) welcher an einer dem Innenraum (7) des Rührbehälters (1) zugewandten Außenseite (10) des Rührwerksführungsrohres (2) und an der Innenseite (11) des Rührbehälters (1) bei seiner Auf- und Abwärtsbewegung abdichtend gleitet und
f) welcher einen Durchtritt (12) für das Schleiföl (25) mit angeschlossener Ableitung (13) aufweist;
g) wobei das Rührwerk (3) in einem ersten Betriebsmodus den ölhaltigen Schleifschlamm mit dem Trennmittel (24) durch Rühren mischt und in einem zweiten Betriebsmodus im Stillstand verharrt, in welchem das Schleiföl (25) oberhalb des Trennmittels (24) aufschwimmt und über die Ableitung (13) aus dem Rührbehälter (1) abführbar ist.

2. Vorrichtung nach Anspruch 1, **dadurch gekennzeichnet, dass** der Ringteller (9) in Richtung auf das Rührwerksführungsrohr (2) aufsteigend geneigt ist und die Ableitung (13) für das Schleiföl (25) am Ringteller (9) im Bereich der Außenseite (10) des Rührwerksführungsrohres (2) angeordnet ist.

3. Vorrichtung nach Anspruch 1 oder 2, **dadurch gekennzeichnet, dass** das Rührwerk (3) bei seiner Aufwärtsbewegung in Richtung auf den Ringteller (9) einen vorgewählten Mindestabstand von diesem nicht unterschreitet.

4. Vorrichtung nach einem der Ansprüche 1 bis 3, **dadurch gekennzeichnet, dass** das Rührwerk (3) derart gesteuert angetrieben wird, dass das mittels des Trennmittels (24) vom Schleifschlamm abgetrennte Schleiföl (25) beim Rühren nicht mit dem Trennmittel (24) emulgiert, und der Stillstand des Rührwerks (3) eine derartige Dauer aufweist, dass das aus dem Schleifschlamm abgetrennte Schleiföl (25) mit einer ausgebildeten Trennfläche auf dem Trennmittel aufschwimmt und nach seinem Entfernen aus dem Rührbehälter (1) zum Schleifen wiederverwendbar ist.

5. Vorrichtung nach einem der Ansprüche 1 bis 4, **dadurch gekennzeichnet, dass** das Rührwerk (3) drehzahlgeregelt und in seiner Drehrichtung umkehrbar angetrieben ist.

6. Vorrichtung nach einem der Ansprüche 1 bis 5, **dadurch gekennzeichnet, dass** das Rührwerk (3) während seines ersten Betriebsmodus im Rührbehälter (1) aufwärts oder abwärts bewegbar ist.

7. Vorrichtung nach einem der Ansprüche 1 bis 6, **dadurch gekennzeichnet, dass** Sensoren zur Erfassung der Viskosität der Flüssigkeit in der Ableitung (13) ein Signal liefern, wenn Trennmittel (24) in die Ableitung (13) eintritt, und daraufhin auf Basis des Signals ein Ventil (14) in der Ableitung (13) geschlossen wird.

8. Verfahren zum Abtrennen von Schleiföl (25) aus Schleifpartikel aufweisendem Schleifschlamm mit einer Vorrichtung gemäß einem der Ansprüche 1 bis 7, welches die folgenden Schritte aufweist:
a) einem Rührbehälter (1) werden Schleiföl (25) aufweisender Schleifschlamm und Trennmittel zur Verringerung der Oberflächenspannung des Schleiföls (25) an den Schleifpartikeln zugeführt;
b) dabei wird mittels eines rotativ angetriebenen Rührwerks (3) ein im Wesentlichen homogenes Gemisch aus Schleifschlamm und Trennmittel erzeugt;
c) sodann wird das Rührwerk (3) stillgesetzt;
d) woran sich ein Aufschwimmen des aus dem Schleifschlamm abgetrennten Schleiföls (25) auf dem Trennmittel und
e) ein Abführen des Schleiföls (25) und des ölabgereinigten Schleifschlammes (23) aus dem Rührbehälter (1) anschließen.

9. Verfahren nach Anspruch 8, bei welchem eine Menge an Trennmittel in den Rührbehälter (1) eingebracht wird, bevor dem Rührbehälter (1) der Schleiföl (25) aufweisende Schleifschlamm zusammen mit weiterem Trennmittel zugeführt wird.

10. Verfahren nach Anspruch 8 oder 9, bei welchem im Rührbehälter (1) verbrauchtes Trennmittel abgeführt und eine der abgeführten Menge entsprechende Menge an frischem Trennmittel (24) dem Rührbehälter (1) wieder zugeführt wird.

11. Verfahren nach Anspruch 8 oder 9, bei welchem eine aus dem Rührbehälter (1) abgeführte Menge an Trennmittel durch eine entsprechend vergrößerte Menge des weiteren Trennmittels mit dem Schleifschlamm gleichzeitig in den Rührbehälter eingebracht wird.

12. Verfahren nach einem der Ansprüche 8 bis 11, bei welchem ein das Gemisch aus Schleifschlamm und Trennmittel im Rührbehälter (1) abdeckender Ringteller (9) in Abstimmung mit dem Rührwerk (3) in Höhenrichtung des Rührbehälters (1) gesteuert verfahren wird.

13. Verfahren nach einem der Ansprüche 8 bis 12, bei welchem der ölabgereinigte Schleifschlamm (23) thermisch oder mechanisch getrocknet wird.

14. Verfahren nach Anspruch 13, bei welchem das mechanische Trocknen durch Pressen erfolgt.

15. Verfahren nach einem der Ansprüche 8 bis 14, bei welchem der Schleifschlamm und das weitere Trennmittel in einem vorbestimmten Verhältnis zueinander in den Rührbehälter (1) dosiert eingebracht werden.

16. Verfahren nach einem der Ansprüche 8 bis 15, bei welchem das Rührwerk (3) stufenlos drehzahlgeregelt wird.

17. Verfahren nach einem der Ansprüche 8 bis 16, bei welchem der ölabgereinigte Schleifschlamm (23) aus dem Rührbehälter (1) abgepumpt wird.

18. Verfahren nach einem der Ansprüche 8 bis 17, bei welchem die Schritte des Rührens und des Stillsetzens des Rührwerks (3) mindestens zweimal durchgeführt werden.

19. Verfahren nach einem der Ansprüche 8 bis 18, bei welchem das abgetrennte Schleiföl (25) aus dem Rührbehälter (1) zur Wiederverwendung abgepumpt oder abgesaugt wird.

## Claims

1. Device for separating grinding oil (25) from grinding slurry, having
a) an agitation tank (1) with an agitator (3), which is movable upwards and downwards in the agitation tank (1) and is mounted in an agitator guide tube (2);
b) a feed line (4) for oil-containing grinding slurry, arranged in the upper region of the agitation tank (1);
c) a feed and discharge line (6) for a separating agent (24) for separating off the grinding oil (25) from the grinding slurry and a discharge line (8) for de-oiled grinding slurry (23), respectively arranged in the lower region of the agitation tank (1);
d) an annular plate (9), which is movable upwards and downwards in the agitation tank (1) between a region above a feed opening (5) of the feed line (4) for the oil-containing grinding slurry and a region above the feed and discharge line (6) for the separating agent;
e) which, as it moves upwards and downwards, slides in a sealing manner on an outer side (10) of the agitator guide tube (2) facing the inner chamber (7) of the agitation tank (1) and on the inner side (11) of the agitation tank (1) and
f)which has a passage (12) for the grinding oil (25) with a connected discharge line (13);
g) wherein, in a first operating mode, the agitator (3) mixes the oil-containing grinding slurry with the separating agent (24) by agitation and, in a second operating mode, the agitator remains at a standstill, during which the grinding oil (25) floats above the separating agent (24) and can be discharged from the agitation tank (1) via the discharge line (13).

2. Device according to Claim 1, **characterized in that** the annular plate (9) is inclined upwards in the direction of the agitator guide tube (2) and the discharge line (13) for the grinding oil (25) is arranged on the annular plate (9) in the region of the outer side (10) of the agitator guide tube (2).

3. Device according to Claim 1 or 2, **characterized in that**, during its upward movement in the direction of the annular plate (9), the agitator (3) does not come within less than a preselected minimum distance from it.

4. Device according to one of Claims 1 to 3, **characterized in that** the agitator (3) is driven in a controlled manner in such a way that the grinding oil (25) separated off from the grinding slurry by means of the separating agent (24) is not emulsified with the separating agent (24) during agitation, and the standstill of the agitator (3) is of such a duration that the grinding oil (25) separated out of the grinding slurry floats with a formed separating surface on the separating agent and after removal from the agitation tank (1) can be reused for grinding.

5. Device according to one of Claims 1 to 4, **characterized in that** the agitator (3) is driven such that it is speed-controlled and reversible in its direction of rotation.

6. Device according to one of Claims 1 to 5, **characterized in that**, during its first operating mode, the agitator (3) is movable upwards or downwards in the agitation tank (1).

7. Device according to one of Claims 1 to 6, **characterized in that** sensors for detecting the viscosity of the fluid in the discharge line (13) supply a signal when separating agent (24) enters the discharge line (13), and then on the basis of the signal a valve (14) in the discharge line (13) is closed.

8. Method for separating off grinding oil (25) from grinding slurry comprising grinding particles with a device according to one of Claims 1 to 7, which method has the following steps:
a) grinding slurry, comprising grinding oil (25), and separating agent, for reducing the surface tension of the grinding oil (25) on the grinding particles, are fed to an agitation tank (1);
b) a substantially homogeneous mixture of grinding slurry and separating agent is thereby produced by means of a rotationally driven agitator (3);
c) then the agitator (3) is stopped;
d) following which, the grinding oil (25) separated out of the grinding slurry floats on the separating agent and
e) the grinding oil (25) and the de-oiled grinding slurry (23) are discharged from the agitation tank (1).

9. Method according to Claim 8, in which a quantity of separating agent is introduced into the agitation tank (1) before the grinding slurry comprising grinding oil (25) is fed to the agitation tank (1) together with further separating agent.

10. Method according to Claim 8 or 9, in which consumed separating agent in the agitation tank (1) is discharged and a quantity of fresh separating agent (24) corresponding to the quantity discharged is fed again to the agitation tank (1).

11. Method according to Claim 8 or 9, in which a quantity of separating agent discharged from the agitation tank (1) is at the same time introduced into the agitation tank through a correspondingly increased quantity of the further separating agent with the grinding slurry.

12. Method according to one of Claims 8 to 11, in which an annular plate (9) covering the mixture of grinding slurry and separating agent in the agitation tank (1) is moved in a controlled manner in co-ordination with the agitator (3) in the vertical direction of the agitation tank (1).

13. Method according to one of Claims 8 to 12, in which the de-oiled grinding slurry (23) is dried thermally or mechanically.

14. Method according to Claim 13, in which the mechanical drying takes place by pressing.

15. Method according to one of Claims 8 to 14, in which the grinding slurry and the further separating agent are introduced into the agitation tank (1) by metering in a predetermined ratio to one another.

16. Method according to one of Claims 8 to 15, in which the agitator (3) is speed-controlled continuously variably.

17. Method according to one of Claims 8 to 16, in which the de-oiled grinding slurry (23) is pumped out of the agitation tank (1).

18. Method according to one of Claims 8 to 17, in which the steps of agitating and stopping the agitator (3) are carried out at least twice.

19. Method according to one of Claims 8 to 18, in which the grinding oil (25) separated off is pumped out or drawn off from the agitation tank (1).

## Revendications

1. Dispositif de séparation d'huile de meulage (25) contenue dans de la boue de meulage, présentant
a) une cuve mélangeuse (1) avec un agitateur (3) monté dans un tube de guidage d'agitateur (2) et mobile vers le haut et vers le bas dans la cuve mélangeuse;
b) une conduite de chargement (4) disposée dans la région supérieure de la cuve mélangeuse (1) pour de la boue de meulage contenant de l'huile;
c) chaque fois une conduite d'alimentation et une conduite d'évacuation (6) disposées dans la région inférieure de la cuve mélangeuse (1) pour un agent de séparation (24) pour la séparation de l'huile de meulage (25) hors de la boue de meulage et une conduite d'évacuation (8) pour la boue de meulage (23) déshuilée;
d) un plateau annulaire (9) mobile vers le haut et vers le bas dans la cuve mélangeuse (1) entre une région située au-dessus d'une ouverture de chargement (5) de la conduite de chargement (4) pour la boue de meulage contenant de l'huile et une région située au-dessus de la conduite d'alimentation et d'évacuation (6) pour l'agent de séparation;
e) qui glisse de façon étanche sur un côté extérieur (10) du tube de guidage d'agitateur (2) tourné vers l'espace intérieur (7) de la cuve mélangeuse (1) et sur le côté intérieur (11) de la cuve mélangeuse (1) lors de son mouvement ascendant et descendant, et
f) qui présente un passage (12) pour l'huile de meulage (25) avec une conduite d'évacuation raccordée (13);
g) dans lequel l'agitateur (3) mélange dans un premier mode de fonctionnement la boue de meulage contenant de l'huile avec l'agent de séparation (24) par agitation et s'immobilise à l'arrêt dans un deuxième mode de fonctionnement, dans lequel l'huile de meulage (25) surnage sur l'agent de séparation (24) et peut être évacuée par la conduite d'évacuation (13) hors de la cuve mélangeuse (1).

2. Dispositif selon la revendication 1, **caractérisé en ce que** le plateau annulaire (9) est incliné vers le haut en direction du tube de guidage d'agitateur (2) et la conduite d'évacuation (13) pour l'huile de meulage (25) est disposée sur le plateau annulaire (9) dans la région du côté extérieur (10) du tube de guidage d'agitateur (2).

3. Dispositif selon la revendication 1 ou 2, **caractérisé en ce que** l'agitateur (3) ne descend pas, lors de son mouvement ascendant en direction du plateau annulaire (9), en dessous d'une distance minimale prédéterminée de celui-ci.

4. Dispositif selon l'une quelconque des revendications 1 à 3, **caractérisé en ce que** l'agitateur (3) est entraîné de façon commandée de telle manière que l'huile de meulage (25) séparée de la boue de meulage au moyen de l'agent de séparation (24) ne soit pas mise en émulsion avec l'agent de séparation (24) lors de l'agitation, et l'arrêt de l'agitateur (3) présente une durée telle que l'huile de meulage (25) séparée de la boue de meulage surnage sur l'agent de séparation avec une face de séparation formée et qu'elle puisse être réutilisée pour le meulage après son évacuation hors de la cuve mélangeuse (1).

5. Dispositif selon l'une quelconque des revendications 1 à 4, **caractérisé en ce que** l'agitateur (3) est régulé en vitesse de rotation et est entraîné de manière réversible quant à son sens de rotation.

6. Dispositif selon l'une quelconque des revendications 1 à 5, **caractérisé en ce que** l'agitateur (3) est déplaçable vers le haut et vers le bas dans la cuve mélangeuse (1) pendant son premier mode de fonctionnement.

7. Dispositif selon l'une quelconque des revendications 1 à 6, **caractérisé en ce que** des capteurs destinés à détecter la viscosité du liquide dans la conduite d'évacuation (13) fournissent un signal, lorsque de l'agent de séparation (24) pénètre dans la conduite d'évacuation (13), et une soupape (14) se ferme ensuite dans la conduite d'évacuation (13) sur la base du signal.

8. Procédé de séparation d'huile de meulage (25) hors d'une boue de meulage présentant des particules de meulage avec un dispositif selon l'une quelconque des revendications 1 à 7, qui présente les étapes suivantes:
a) on envoie à une cuve mélangeuse (1) une boue de meulage présentant de l'huile de meulage (25) et un agent de séparation destiné à réduire la tension superficielle de l'huile de meulage (25) sur les particules de meulage;
b) en l'occurrence, on produit un mélange essentiellement homogène de boue de meulage et d'agent de séparation au moyen d'un agitateur (3) entraîné en rotation;
c) on arrêt ensuite l'agitateur (3);
d) puis il s'ensuit une flottation de l'huile de meulage (25) séparée de la boue de meulage sur l'agent de séparation et
e) une évacuation de l'huile de meulage (25) et de la boue de meulage déshuilée (23) hors de la cuve mélangeuse (1).

9. Procédé selon la revendication 8, dans lequel on introduit une quantité d'agent de séparation dans la cuve mélangeuse (1), avant que la boue de meulage présentant de l'huile de meulage (25) soit ajoutée à la cuve mélangeuse (1) en même temps qu'un autre agent de séparation.

10. Procédé selon la revendication 8 ou 9, dans lequel on évacue l'agent de séparation consommé dans la cuve mélangeuse (1) et on ajoute de nouveau à la cuve mélangeuse (1) une quantité d'agent de séparation frais correspondant à la quantité évacuée.

11. Procédé selon la revendication 8 ou 9, dans lequel on introduit simultanément dans la cuve mélangeuse une quantité d'agent de séparation évacuée hors de la cuve mélangeuse (1) par une quantité de l'autre agent de séparation accrue de façon correspondante avec la boue de meulage.

12. Procédé selon l'une quelconque des revendications 8 à 11, dans lequel on déplace de façon commandée un plateau annulaire (9) recouvrant le mélange de boue de meulage et d'agent de séparation dans la cuve mélangeuse (1) en accord avec l'agitateur (3) dans la direction de hauteur de la cuve mélangeuse (1).

13. Procédé selon l'une quelconque des revendications 8 à 12, dans lequel on sèche thermiquement ou mécaniquement la boue de meulage déshuilée (23).

14. Procédé selon la revendication 13, dans lequel on effectue le séchage mécanique par pressage.

15. Procédé selon l'une quelconque des revendications 8 à 14, dans lequel on introduit la boue de meulage et l'autre agent de séparation dans la cuve mélangeuse (1) de façon dosée dans un rapport prédéterminé l'un par rapport à l'autre.

16. Procédé selon l'une quelconque des revendications 8 à 15, dans lequel on régule l'agitateur (3) en vitesse de rotation de façon continue.

17. Procédé selon l'une quelconque des revendications 8 à 16, dans lequel on pompe la boue de meulage déshuilée (23) hors de la cuve mélangeuse (1).

18. Procédé selon l'une quelconque des revendications 8 à 17, dans lequel on exécute au moins deux fois les étapes d'agitation et d'arrêt de l'agitateur (3).

19. Procédé selon l'une quelconque des revendications 8 à 18, dans lequel on pompe ou on aspire l'huile de meulage séparée (25) hors de la cuve mélangeuse (1) en vue de sa réutilisation.
